# EUROPÄISCHE PATENTSCHRIFT

(11) **EP 2 941 354 B1**
(45) Veröffentlichungstag und Bekanntmachung des Hinweises auf die Patenterteilung: **22.03.2017**
(21) Anmeldenummer: 14830942.0
(22) Anmeldetag: 17.12.2014
(51) Int. Cl.: B41M 1/12, C09K 3/14

(54) **SCHLEIFPARTIKEL UND SCHLEIFMITTEL MIT HOHER SCHLEIFLEISTUNG**
ABRASIVE PARTICLES AND ABRASION MEANS WITH HIGH ABRASIVE POWER
PARTICULE ABRASIVE ET AGENT ABRASIF AYANT UN POUVOIR ABRASIF ÉLEVÉ

(30) Priorität: 19.12.2013 DE 102013114491
(43) Veröffentlichungstag der Anmeldung: 11.11.2015
(73) Patentinhaber: Klingspor AG, 35708 Haiger (DE)
(72) Erfinder: BOCK, Irene, 35683 Dillenburg (DE); KAMPS, Thomas, 59439 Holzwickede (DE)
(74) Vertreter: advotec.
(86) Internationale Anmeldenummer: PCT/DE2014/100453
(87) Internationale Veröffentlichungsnummer: WO 2015/090283

(56) Entgegenhaltungen:
- EP-A1- 1 935 957
- WO-A2-03/018261
- DE-A1- 2 349 326
- US-A1- 2007 293 130

## Beschreibung

Die vorliegende Erfindung betrifft Schleifpartikel und Schleifmittel unter Verwendung der Schleifpartikel mit hoher Schleifleistung.

Gattungsgemäße Schleifpartikel bestehen unter anderem aus keramischen Werkstoffen und werden zur Herstellung von Schleifmitteln verwendet. Die Schleifmittel dienen dabei wiederum zur Bearbeitung bzw. zum Beschleifen eines Schleifguts. Die keramischen Schleifpartikel eignen sich aufgrund der keramischen Materialeigenschaften zur Anwendung und zur Herstellung entsprechender Schleifmittel. Neben den puren Materialeigenschaften spielen jedoch für die Schleifleistung eines Schleifmittels, insbesondere über die Lebensdauer des Schleifmittels bzw. bezüglich der Abnutzung des Schleifmittels und der Schleifpartikel auch verschiedene andere Eigenschaften der Schleifpartikel eine nicht unerhebliche Rolle.

Aus der Druckschrift US 2007/0293130 A1 ist ein Schleifmittel bekannt, das Schleifpartikel und hohle Mikropartikel aufweist, die in einem Matrixmaterial eingebettet sind. Die Mikropartikel dienen zur Verbesserung der Verschleißeigenschaften.

Aus der Druckschrift WO 03/018261 A2 ist ein Schleifwerkzeug bekannt, das einen abrasiv wirksamen Rand aufweist, der Schleifkorn und hohle Füllkörper umfasst.

Aus der Druckschrift DE 23 49 326 sind hohle Schleifkörner bekannt.

Bisher sind die verfügbaren Schleifpartikel hinsichtlich ihrer Schleifleistung und besonders hinsichtlich der Veränderung der Schleifleistung während der Abnutzung unzufriedenstellend.

Demnach liegt der vorliegenden Erfindung die Aufgabe zugrunde, gattungsgemäße Schleifpartikel und Schleifmittel unter Verwendung von Schleifpartikeln derart weiterzuentwickeln, dass eine verbesserte Schleifleistung auch bei kontinuierlicher Abnutzung der Schleifpartikel ermöglicht wird.

Diese Aufgabe wird durch die erfindungsgemäßen Schleifpartikel gemäß Anspruch 1 sowie die erfindungsgemäßen Schleifmittel nach Anspruch 11 gelöst. Vorteilhafte Ausführungen der Schleifpartikel und Schleifmittel sind Gegenstand der Unteransprüche.

Der Grundgedanke der vorliegenden Erfindung besteht darin, einen hohlen Schleifpartikel vorzuschlagen, der einen Mantel aufweist, wobei der Mantel ein innen liegendes Hohlvolumen aufweist. Dadurch wird eine Geometrie des Schleifpartikels geschaffen, der verschiedene Vorteile gegenüber bekannten massiven Schleifpartikeln hat. Bei massiven Schleifpartikeln vergrößert sich je nach Geometrie des Schleifpartikels und der Orientierung des Schleifpartikels bezogen auf die Oberfläche des Schleifguts während des Schleifvorgangs unter Abnutzung des Schleifpartikels die Oberfläche des Schleifpartikels, die mit dem Schleifgut in Kontakt kommt. Diese Vergrößerung der Oberfläche führt jedoch zu einer Verminderung der Schleifleistung durch eine entsprechende Verringerung des Anpressdrucks am Schleifgut.

Demgegenüber haben die vorgeschlagenen Schleifpartikel aufweisend einen Mantel und ein im Mantel angeordnetes Hohlvolumen den Vorteil, dass während der Abnutzung des Schleifpartikels die Vergrößerung der Fläche, die mit dem Schleifgut in Kontakt kommt, durch das Vorhandensein des Hohlvolumens begrenzt wird. Mit anderen Worten ausgedrückt, bedeutet dies, dass die erfindungsgemäßen Schleifpartikel auch bei Verschleiß und Abnutzung eine weitestgehend konstante Anlagefläche zum jeweiligen Schleifgut beibehalten und somit ein konstanter Anpressdruck erzeugt wird. Dadurch wird eine stabile Schleifleistung ermöglicht.

Der Schleifpartikel weist einen Mantel mit einer Schichtstruktur auf. Eine Schichtstruktur ermöglicht beispielsweise einen Schleifpartikel aus unterschiedlichen Materialien in wechselnden Schichten herzustellen. Solche wechselnden Schichten können einerseits die mechanische Stabilität des Schleifpartikels positiv beeinflussen. Andererseits kann durch eine Schichtstruktur aus identischen oder unterschiedlichen Materialien jedoch auch die Schleifleistung verbessert werden. Dies gilt insbesondere dann, wenn durch die Schichtstruktur des Mantels besonders bevorzugte Geometrien der Hohlkörper-Schleifpartikel hergestellt werden, die besonders hohe Schleifleistungen und besonders konstante Schleifleistungen zeigen. Als Beispiel derartiger Geometrien umfassend einen Mantel und ein innen liegendes Hohlvolumen seien ohne Ausschluss anderer Geometrien Tetraeder, Pyramide, Quader, Prisma, Spate, Kegel, Flasche, Zylinder und allgemein Polyeder verschiedenster Form genannt.

Dabei ist es besonders vorteilhaft, wenn das Hohlvolumen frei von Materialrückständen des Herstellungsprozesses ist. Solche Materialrückstände entstehen beispielsweise bei der thermischen Zersetzung von Stützmaterial zur Abstützung von Hohlräumen und können im Fall der Schleifpartikel eine nachteilige Wirkung auf die Schleifleistung der Partikel haben. Dementsprechend ist es ein besonderer Vorzug der Schleifpartikel, wenn das Hohlvolumen zu jedem Zeitpunkt der Herstellung der Schleifpartikel freistehend bzw. freitragend ist, und dadurch kein Stützmaterial und davon zurückbleibende Materialrückstände im Hohlvolumen der Schleifpartikel angeordnet sind.

Weiter vorteilhaft ist es, wenn der Mantel der Schleifpartikel eine weitgehend konstante Mantelstärke aufweist. Durch die weitgehend konstante Mantelstärke wird ermöglicht, dass die mit dem Schleifgut in Kontakt kommende Oberfläche des Schleifpartikels unabhängig von der jeweiligen Orientierung und dem Abnutzungszustand des Schleifpartikels weitestgehend konstant bleibt. Dadurch wiederum wird eine weitreichende Kontinuität der Schleifleistung des jeweiligen Schleifpartikels eines Schleifmittels ermöglicht.

Weiter kann die Schleifleistung dadurch positiv beeinflusst werden, wenn die Innenoberfläche des Mantels und/oder die Außenoberfläche des Mantels eine Stufenstruktur aufweist. Die Innenoberfläche ist dabei die Oberfläche des Mantels, die an das Hohlvolumen angrenzt. Solche Stufenstrukturen führen sowohl auf der Innenoberfläche als auch auf der Außenoberfläche des Mantels zu einer Vielzahl von Raumwinkeln von 90° oder weniger. Derartige Spitzen der Mantelfläche bzw. des Mantels verringern die Anlagefläche zwischen Schleifpartikel und Schleifgut. Dementsprechend verbessert eine Stufenstruktur des Mantels auf der Innenoberfläche und/oder der Außenoberfläche die Schleifleistung der Schleifpartikel. Die Verbesserung ist so lange möglich, wie durch die Verringerung der Anlagefläche der Anpressdruck beim Schleifen erhöht werden kann und zudem bei einem entsprechenden Schleifpartikel samt Stufenstruktur die Schleifwirkung in der Fläche noch homogen bleibt, so dass die Erhöhung des Anpressdrucks keine negativen Folgen für die flächige Verteilung der Schleifleistung hat.

Die erfindungsgemäßen Schleifpartikel sind in einer besonders vorteilhaften Form mit einem Mantel mit Schichtstruktur versehen, wobei die Schichten des Mantels in einem mehrstufigen Siebdruckverfahren gebildet werden. Mittels eines solchen mehrstufigen Siebdruckverfahrens lassen sich nahezu alle Geometrien von Schleifpartikeln mit innen liegendem Hohlraum realisieren. Zudem ermöglicht ein mehrstufiges Siebdruckverfahren besonders dünne Schichten des Mantels, so dass auch kleine bzw. kleinste Schleifpartikel mit einem Mantel und einem entsprechend innen liegenden Hohlvolumen möglich sind.

Es ist jedoch auch möglich, die Schleifpartikel über eine Vorrichtung zum dreidimensionalen Drucken und einem entsprechenden Druckverfahren (3D-Druck) herzustellen. Gattungsgemäße Vorrichtungen und Verfahren sind beispielsweise aus dem Bereich "Rapid-Prototyping" bekannt.

Außerdem wird die Stabilität und die Schleifleistung der erfindungsgemäßen Schleifpartikel besonders positiv beeinflusst, wenn das Hohlvolumen vollständig vom Mantel umschlossen ist.

Alternativ kann es jedoch auch vorteilhaft sein, wenn der Mantel des Schleifpartikels zwei oder mehr Durchbrechungen zum Hohlraum aufweist, wobei die Durchbrechungen in zueinander unterschiedlichen Raumrichtungen angeordnet sind. Als Raumrichtung einer Durchbrechung im Mantel zum Hohlvolumen soll dabei die Senkrechte auf dem Mantel bzw. dem gedachten Mantel am Ort der Durchbrechung angesehen werden. Derartige Durchbrechungen zum Hohlvolumen des Schleifpartikels haben verschiedene vorteilhafte Wirkungen. Einerseits kann dadurch die mit dem Schleifgut zur Anlage kommende Fläche noch stärker unabhängig von der Orientierung bzw. Ausrichtung zwischen Schleifpartikeln und Schleifgut gemacht werden. Zudem kann durch eine entsprechende Anordnung von Durchbrechungen in verschiedenen Raumrichtungen ein Schleifpartikel unter geringem Materialaufwand hergestellt werden, der trotzdem zu einem vergleichbaren Schleifpartikel ohne Durchbrechungen eine vergleichbare Schleifleistung erreicht.

Besonders wünschenswert ist es, wenn die Durchbrechungen im Mantel des Schleifpartikels und der entsprechend verbleibende Mantel des Schleifpartikels so zueinander angeordnet sind, dass eine Balkenstruktur aus dem Mantel gebildet wird. Dabei sind besonders solche Balkenstrukturen bevorzugt, die die Kanten einer Polyederstruktur nachbilden. Derartige Balkenstrukturen haben ebenfalls den Vorteil, dass die mit dem Schleifgut zur Anlage kommende Oberfläche des Schleifpartikels unabhängig von Ausrichtung und Abnutzung des Schleifpartikels weitestgehend konstant und zudem sehr gering gegenüber entsprechenden massiven Schleifpartikeln ist. Dementsprechend wird eine hohe Schleifleistung während des gesamten Abnutzungsprozesses des Schleifpartikels ermöglicht, die ebenfalls noch keine negative Auswirkung auf die Verteilung der Schleifwirkung in der Fläche hat.

Weiter ist es besonders vorteilhaft, wenn im Hohlvolumen der Schleifpartikel schleifaktive Substanzen angeordnet sind. Derartige schleifaktive Substanzen sind Materialien, die beim Kontakt mit dem Schleifgut und/oder dem Schleifpartikel den Schleifprozess positiv beeinflussen. Dabei kann sowohl vorgesehen sein, dass das Hohlvolumen von Schleifpartikeln mit Durchbrechungen als auch ohne Durchbrechungen im Mantel derartige schleifaktive Substanzen aufweist. Bei Schleifpartikeln mit Durchbrechungen zum Hohlvolumen ist jedoch besonders vorteilhaft, dass die schleifaktiven Substanzen nach Herstellung der Schleifpartikel in einem Tauchverfahren oder dergleichen in die Schleifpartikel eingebracht werden können. Alternativ oder additiv kann jedoch auch vorgesehen sein, dass zumindest in Teilen der Schichten des Mantels derartige schleifaktive Substanzen enthalten sind.

Zudem ist es besonders wünschenswert, wenn die vorgeschlagenen Schleifpartikel aus keramischer Formmasse gebildet sind. Dadurch lassen sich die vorteilhaften Eigenschaften keramischer Schleifpartikel mit den vorangehend beschriebenen vorteilhaften Eigenschaften der Schleifpartikel mit Mantel und Hohlvolumen verknüpfen. Weiter ist es besonders vorteilhaft, wenn die Schleifpartikel, insbesondere der Mantel der Schleifpartikel aus einem Gel eines Sol-Gel-Systems gebildet sind.

Ebenfalls Gegenstand der vorliegenden Erfindung sind Schleifmittel, umfassend Schleifpartikel gemäß der vorangegangenen und nachfolgenden Offenbarung. Dabei kann vorgesehen sein, dass die Schleifmittel ein Substrat aufweisen, auf dem mit einem entsprechenden Bindemittel die Schleifpartikel befestigt sind.

Einzelne Ausgestaltungen und Aspekte der erfindungsgemäßen Schleifpartikel und Schleifmittel werden nachfolgend beispielhaft anhand lediglich schematischer Zeichnungen erläutert.

Es zeigt:
- Figur 1: einen erfindungsgemäßen Schleifpartikel in einer ersten Ausgestaltung;
- Figur 2: den Schleifpartikel gemäß Figur 1 in einem beispielhaften Abnutzungszustand;
- Figur 3: einen erfindungsgemäßen Schleifpartikel gemäß einer zweiten Ausgestaltung;
- Figur 4: einen erfindungsgemäßen Schleifpartikel gemäß einer dritten Ausgestaltung;
- Figur 5: einen erfindungsgemäßen Schleifpartikel gemäß einer vierten Ausgestaltung;
- Figur 6: einen erfindungsgemäßen Schleifpartikel gemäß einer fünften Ausgestaltung; und
- Figur 7: einen erfindungsgemäßen Schleifpartikel gemäß einer sechsten Ausgestaltung.

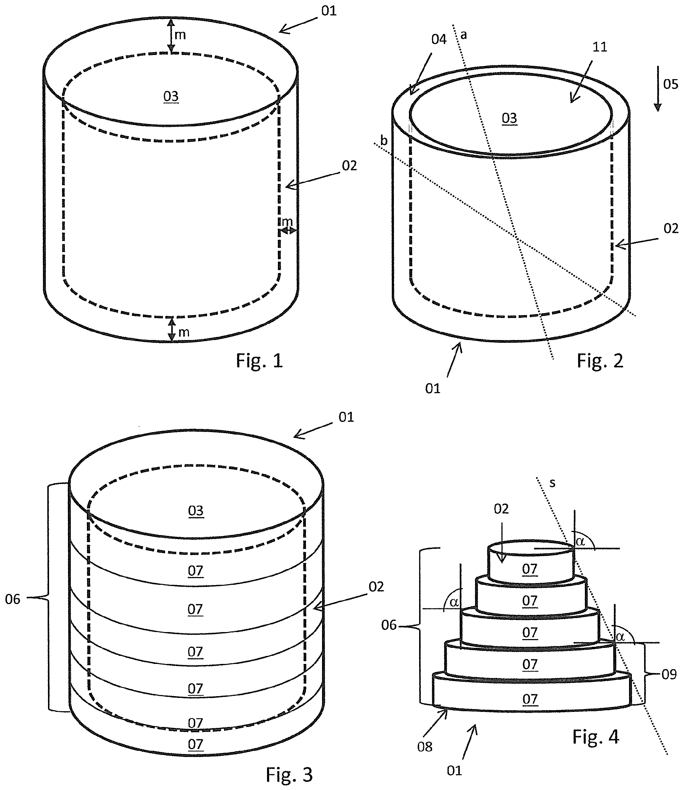

Figur 1 zeigt einen Schleifpartikel 01 mit einem Mantel 02. Strichliniert angedeutet ist in Figur 1 außerdem das innerhalb des Mantels 02 angeordnete Hohlvolumen 03 des Schleifpartikels 01. An verschiedenen Stellen des Schleifpartikels 01 ist zudem die Mantelstärke m angedeutet. Wie aus der Figur 1 hervorgeht, ist dabei die Mantelstärke m für den gesamten Schleifpartikel 01 weitgehend konstant. Ein Schleifpartikel, wie er in der Figur 1 dargestellt ist, hat dementsprechend die Vorteile, dass eine kontinuierliche oder zumindest abschnittsweise Vergrößerung der Anlagefläche zwischen dem Schleifpartikel und einem Schleifgut während der Abnutzung des Schleifpartikels durch das innen liegende Hohlvolumen 03 weitestgehend beschränkt bzw. eliminiert wird. Trotzdem bietet der Mantel 02 des Schleifpartikels 01 eine ausreichende mechanische Stabilisierung, um unter den auftretenden Kräften während dem Schleifvorgang zu bestehen.

Die Vorteile eines Hohlvolumens 03 innerhalb des Mantels 02 eines Schleifpartikels 01 sind beispielhaft in der Figur 2 dargestellt. Die Figur 2 zeigt den Schleifpartikel 01 der Figur 1 in einem teilweise bereits abgenutzten bzw. abgeschliffenen Zustand. Dabei kommt die Oberfläche 04 des Mantels 02 mit dem Schleifgut, welches in der Figur 2 nicht dargestellt ist, in Kontakt und bewirkt im Allgemeinen eine Abnutzung des Schleifkörpers 01 in Richtung des Pfeils 05. Aus der Figur 2 ist leicht ersichtlich, dass die Oberfläche 04 einerseits deutlich gegenüber einer entsprechenden Fläche eines massiven Körpers ohne Hohlvolumen 03 verringert ist, was bereits zu einer deutlichen Verbesserung der Schleifleistung führt.

Zudem ist deutlich erkennbar, dass die Fläche 04 auch bei weiterer Abnutzung des Schleifpartikels 01 in Richtung des Pfeils 05 im Wesentlichen unverändert bleibt, wodurch die insgesamt hohe Schleifleistung des Schleifpartikels 01 beibehalten wird. Auch wenn die Oberfläche 04 hinsichtlich der Geometrie des Schleifpartikels 01 eine besondere Richtung bzw. Ausrichtung, nämlich parallel zum Boden des Mantels 02 darstellt, so ist doch leicht nachvollziehbar, dass auch bei einer Anlage des Schleifguts entlang der punktiert angedeuteten Ebenen a und b die resultierenden Eigenschaften, insbesondere die vorteilhaften Eigenschaften des Hohlvolumens 03, wie oben beschrieben, in gleichen oder zumindest sehr ähnlichen Maßen realisiert werden. Demnach sind die Vorteile der erfindungsgemäßen Schleifpartikel 01 nicht von einer bestimmten Ausrichtung der Schleifpartikel 01 bezüglich des Schleifguts abhängig. Umgekehrt ist es vielmehr gerade der Vorteil der erfindungsgemäßen Schleifpartikel 01 umfassend einen Mantel 02 und einen innerhalb des Mantels angeordneten Hohlvolumens 03, dass die Schleifleistung und die Veränderung der Schleifleistung während der Abnutzung des Schleifpartikels 01 von der Ausrichtung zum Schleifgut unabhängig wird bzw. ist. Weiter ist in der Darstellung der Figur 2 auch die Innenoberfläche 11 des Mantels 02 erkennbar, die das Holvolumen 03 vom Mantel 02 abgrenzt.

Der Schleifpartikel 01 der Figur 3 zeigt im Wesentlichen dieselbe geometrische Form, wie der Schleifpartikel 01 der Figur 1. Im Unterschied zur Figur 1 besteht der Mantel 02 des Schleifpartikels 01 jedoch aus einer Schichtstruktur 06, die aus den einzelnen Schichten 07 aufgebaut ist. Wie auch in der Figur 3 dargestellt, ist es bei einer derartigen Schichtstruktur 06 des Mantels 02 möglich, jedoch nicht zwangsläufig nötig, die Schichten 07 der Schichtstruktur 06 parallel zu bevorzugten Symmetrieachsen des Schleifpartikels 01 auszurichten.

Für die Schichten 07 der Schichtstruktur 06 kann zudem vorgesehen sein, dass diese aus unterschiedlichen Materialien bestehen. Neben keramischen Materialien sind beispielsweise auch Schichten 07 aus schleifaktiven Substanzen denkbar. Zudem haben solche Schleifpartikel den Vorteil, dass sie im Rahmen von mehrstufigen Siebdruckverfahren herstellbar sind, wodurch komplexe Geometrien und eine besonders geringe individuelle Schichtstärke der Schichten 07 erreicht werden können.

Der Schleifpartikel 01 der Figur 4 weist ebenfalls einen Mantel 02 mit einer Schichtstruktur 06 auf. Der Mantel 02 umschließt dabei vollständig einen in der Figur 4 nicht dargestelltes oder angedeutetes Hohlvolumen. Zudem weist der Mantel 02 neben der Schichtstruktur 06 umfassend die Schichten 07 auf der Außenoberfläche 08 des Mantels 02 eine Stufenstruktur 09 auf. Die Vorteile einer solchen Stufenstruktur 09 sind die daraus resultierenden vielen Raumwinkel α des Schleifpartikels mit 90° oder weniger. Aufgrund der resultierenden Raumwinkel α der Stufenstruktur 09 ergibt sich bei einer Orientierung des Schleifpartikels 01 zu einer Oberfläche eines Schleifguts, wie sie in der Figur 4 punktiert durch die Ebene s skizziert ist, dass nicht die gesamte parallel zur Ebene s verlaufende Außenoberfläche 08 des Mantels 02 mit dem Schleifgut in Kontakt kommt, sondern zunächst vielmehr nur die Spitzen bzw. Kanten der Stufenstruktur 09 des Mantels 02. Auch dadurch wird demnach die schleifaktive Fläche des Schleifpartikels 01 weitgehend vom Abnutzungszustand und der Ausrichtung des Schleifpartikels unabhängig gemacht und die Fläche zudem weiter verringert, was einen höheren Anpressdruck ermöglicht. Beides dient abermals zur Erhöhung der Schleifleistung, sowohl momentan als auch während der Abnutzung des Schleifpartikels 01. Gleichzeitig wird die auf die Oberfläche des Schleifguts bezogene Gleichmäßigkeit des Schleifprozesses durch die Stufenstruktur nicht negativ beeinflusst. Die in der Figur 4 nicht dargestellte Innenoberfläche des Schleifpartikels 01 kann ebenfalls eine Stufenstruktur aufweisen.

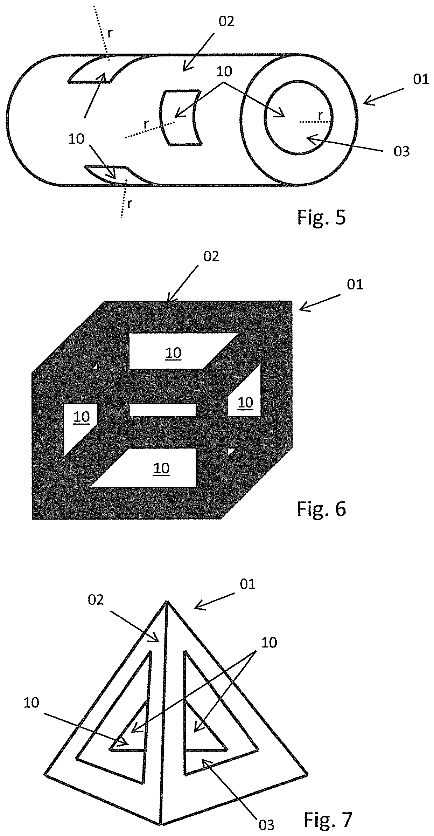

Figur 5 zeigt einen Schleifpartikel 01, bei dem insgesamt vier Durchbrechungen 10 zum Hohlvolumen 03 vorhanden sind. Die punktiert dargestellten Linien r deuten dabei die unterschiedlichen Raumrichtungen der Durchbrechungen 10 des Mantels 02 an. Die Raumrichtungen der Durchbrechungen 10 sind jeweils als Senkrechte auf den Mantel bzw. den gedachten Mantel am Ort der Durchbrechung 10 zu verstehen. In Figur 5 sind die unterschiedlichen Durchbrechungen 10 demnach jeweils in unterschiedlichen Raumrichtungen zueinander angeordnet. Derartige Durchbrechungen können zur aktiven Erhöhung der Schleifleistung des Schleifpartikels durch Minimierung von Anlagefläche zwischen Schleifpartikel und Schleifgut dienen, solange dadurch ein gesteigerter Anpressdruck bei gleichbleibender Flächen-Homogenität des Schleifvorgangs erzielt wird. Zudem ermöglichen die Durchbrechungen 10 auch, dass beispielsweise im Rahmen eines Tauchvorgangs oder einer Tauchbeschichtung schleifaktive Substanzen oder Materialien im Hohlvolumen bzw. auf der Innenoberflächen oder auf der Außenoberfläche des Schleifpartikels 01 angeordnet werden.

Eine weitere Abwandlung stellt der Schleifpartikel 01 der Figur 6 dar. Der Schleifpartikel 01 hat neben einem Mantel 02 insgesamt sechs Durchbrechungen, so dass der Mantel 02 eine Balkenstruktur bildet, die wiederum die Kanten eines Polyeders, in diesem Fall die Kanten eines Quaders oder Würfels bildet bzw. nachbildet. Auch die Durchbrechungen 10 des Schleifpartikels 01 der Figur 6 sind insgesamt in drei zueinander rechtwinkeligen Raumrichtungen angeordnet. Durch die dargestellte Balkenstruktur wird ebenfalls eine hohe Schleifleistung während der gesamten Abnutzung des Schleifpartikels 01 und gleichzeitig eine Aufnahme von schleifaktiven Substanzen in das Hohlvolumen 03 ermöglicht. Unter dem Begriff der Balkenstruktur, wie sie in der vorliegenden Beschreibung verstanden wird, soll jedoch nicht nur eine Anordnung verstanden werden, wie sie in Figur 6 dargestellt ist. Auch als Balkenstruktur gilt ein Mantel, bei dem die Durchbrechungen 10 im Vergleich zur Figur 6 deutlich kleiner ausfallen.

Eine weitere Abwandlung eines Schleifpartikels 01 ist in Figur 7 dargestellt. Auch der Schleifpartikel 01 der Figur 7 bildet mit seinem Mantel 02 und den Durchbrechungen 10 eine Balkenstruktur. Im Fall der Figur 7 bilden die Balken des Mantels 02 die Kanten eines Tetraeders, wobei innerhalb des Mantels 02 ein Hohlvolumen 03 vorhanden ist.

## Patentansprüche

1. Schleifpartikel (01)
der einen Mantel (02) und ein innerhalb des Mantels (02) angeordnetes Hohlvolumen (03) aufweist, **dadurch gekennzeichnet, dass** der Mantel (02) eine Schichtstruktur (06) umfassend eine Mehrzahl von Schichten (07) aufweist.

2. Schleifpartikel (01) nach Anspruch 1,
**dadurch gekennzeichnet,**
**dass** das Hohlvolumen (03) frei von Materialrückständen ist.

3. Schleifpartikel (01) nach Anspruch 1 oder 2,
**dadurch gekennzeichnet,**
**dass** der Mantel (02) eine weitgehend konstante Mantelstärke (m) aufweist.

4. Schleifpartikel (01) nach einem der Ansprüche 1 bis 3,
**dadurch gekennzeichnet,**
**dass** eine Innenoberfläche (11) des Mantels (02) und/oder Außenoberfläche (08) des Mantels (02) eine Stufenstruktur (09) aufweist.

5. Schleifpartikel (01) nach einem der Ansprüche 1 bis 4,
**dadurch gekennzeichnet,**
**dass** die Schichten (07) des Mantels (02) in einem mehrstufigen Siebdruckverfahren gebildet werden.

6. Schleifpartikel (01) nach einem der Ansprüche 1 bis 5,
**dadurch gekennzeichnet,**
**dass** das Hohlvolumen (03) vollständig vom Mantel (02) umschlossen ist.

7. Schleifpartikel (01) nach einem der Ansprüche 1 bis 6,
**dadurch gekennzeichnet,**
**dass** der Mantel (02) zwei oder mehr Durchbrechungen (10) zum Hohlvolumen (03) aufweist, wobei zumindest zwei Durchbrechungen (10) in zueinander unterschiedlichen Raumrichtungen (r) angeordnet sind.

8. Schleifpartikel (01) nach Anspruch 7,
**dadurch gekennzeichnet,**
**dass** der Mantel (02) und die Durchbrechungen (10) eine Balkenstruktur bilden.

9. Schleifpartikel (01) nach einem der Ansprüche 1 bis 8,
**dadurch gekennzeichnet,**
**dass** im Hohlvolumen (03) schleifaktive Substanzen angeordnet sind.

10. Schleifpartikel (01) nach einem der Ansprüche 1 bis 9,
**dadurch gekennzeichnet,**
**dass** der Mantel (02) aus keramischer Formmasse gebildet ist.

11. Schleifpartikel (01) nach einem der Ansprüche 1 bis 10,
**dadurch gekennzeichnet,**
**dass** der Mantel (02) aus einem Gel eines Sol-Gel-Systems gebildet ist.

12. Schleifinittel
**dadurch gekennzeichnet,**
**dass** das Schleifmittel Schleifpartikel (01) gemäß der Ansprüche 1 bis 11 aufweist.

## Claims

1. An abrasive particle (01)
having a shell (02) and a hollow space (03) arranged within the shell (02), **characterized in that** the shell (02) has a layer structure (06) comprising a plurality of layers (07).

2. The abrasive particle (01) according to claim 1,
**characterized in that**
the hollow space (03) is free of material residue.

3. The abrasive particle (01) according to claim 1 or 2,
**characterized in that**
the shell (02) has a largely constant shell thickness (m).

4. The abrasive particle (01) according to any one of claims 1 to 3,
**characterized in that**
an inner surface (11) of the shell (02) and/or an outer surface (08) of the shell (02) have a stepped structure (09).

5. The abrasive particle (01) according to any one of claims 1 to 4,
**characterized in that**
the layers (07) of the shell (02) are formed in a multi-stage screen printing process.

6. The abrasive particle (01) according to any one of claims 1 to 5,
**characterized in that**
the hollow space (03) is completely enclosed by the shell (02).

7. The abrasive particle (01) according to any one of claims 1 to 6,
**characterized in that**
the shell (02) has two or more through holes (10) toward the hollow space (03), at least two through holes (10) being arranged in mutually different spatial directions (r).

8. The abrasive particle (01) according to claim 7,
**characterized in that**
the shell (02) and the through holes (10) form a beam structure.

9. The abrasive particle (01) according to any one of claims 1 to 8,
**characterized in that**
abrasive substances are arranged in the hollow space (03).

10. The abrasive particle (01) according to any one of claims 1 to 9, **characterized in that**
the shell (02) is made from a ceramic molding compound.

11. The abrasive particle (01) according to any one of claims 1 to 10,
**characterized in that**
the shell (02) is formed from a gel of a sol-gel system.

12. An abrasive,
**characterized in that**
the abrasive has abrasive particles (01) according to claims 1 to 11.

## Revendications

1. Particule abrasive (01)
ayant une enveloppe (02) et un espace creux (03) disposé dans l'enveloppe (02), **caractérisée en ce que** l'enveloppe (02) a une structure en couches (06) comprenant une pluralité de couches (07).

2. Particule abrasive (01) selon la revendication 1,
**caractérisée en ce que**
l'espace creux (03) est exempt de résidus de matériau.

3. Particule abrasive (01) selon la revendication 1 ou 2,
**caractérisée en ce que**
l'enveloppe (02) a une épaisseur d'enveloppe (m) largement constante.

4. Particule abrasive (01) selon l'une quelconque des revendications 1 à 3,
**caractérisée en ce qu'**
une surface intérieure (11) de l'enveloppe (02) et/ou une surface extérieure (08) de l'enveloppe (02) a une structure en gradins (09).

5. Particule abrasive (01) selon l'une quelconque des revendications 1 à 4,
**caractérisée en ce que**
les couches (07) de l'enveloppe (02) sont formées par un procédé de sérigraphie en plusieurs étapes.

6. Particule abrasive (01) selon l'une quelconque des revendications 1 à 5,
**caractérisée en ce que**
l'espace creux (03) est entièrement enfermé par l'enveloppe (02).

7. Particule abrasive (01) selon l'une quelconque des revendications 1 à 6,
**caractérisée en ce que**
l'enveloppe (02) a deux ou plusieurs ouvertures (10) vers l'espace creux (03), au moins deux ouvertures (10) étant disposées dans des directions spatiales (r) mutuellement différentes.

8. Particule abrasive (01) selon la revendication 7,
**caractérisée en ce que**
l'enveloppe (02) et les ouvertures (10) forment une structure en poutres.

9. Particule abrasive (01) selon l'une quelconque des revendications 1 à 8,
**caractérisée en ce que**
des substances abrasives sont disposées dans l'espace creux (03).

10. Particule abrasive (01) selon l'une quelconque des revendications 1 à 9,
**caractérisée en ce que**
l'enveloppe (02) est constituée d'une matière moulable céramique.

11. Particule abrasive (01) selon l'une quelconque des revendications 1 à 10,
**caractérisée en ce que**
l'enveloppe (02) est constituée d'un gel d'un système sol-gel.

12. Abrasif,
**caractérisé en ce que**
l'abrasif comporte des particules abrasives (01) selon les revendications 1 à 11.
